# EUROPÄISCHE PATENTSCHRIFT

(11) **EP 2 558 335 B1**
(45) Veröffentlichungstag und Bekanntmachung des Hinweises auf die Patenterteilung: **15.08.2018**
(21) Anmeldenummer: 11715423.7
(22) Anmeldetag: 12.04.2011
(51) Int. Cl.: B60R 21/216

(54) **AIRBAGANORDNUNG SOWIE VERFAHREN ZUR HERSTELLUNG DERSELBEN**
AIRBAG SYSTEM AND METHOD FOR MANUFACTURING THE SAME
SYSTÈME D'AIRBAG ET PROCÉDÉ DE FABRICATION DE CELUI-CI

(30) Priorität: 13.04.2010 DE 102010015256
(43) Veröffentlichungstag der Anmeldung: 20.02.2013
(73) Patentinhaber: Faurecia Innenraum Systeme GmbH, 76767 Hagenbach (DE); Audi AG, 85045 Ingolstadt (DE)
(72) Erfinder: KALKAN, Bülent, 67105 Schifferstadt (DE); SABO, Peter, 85057 Ingolstadt (DE)
(74) Vertreter: Pfenning, Meinig & Partner mbB
(86) Internationale Anmeldenummer: PCT/EP2011/001818
(87) Internationale Veröffentlichungsnummer: WO 2011/128062

(56) Entgegenhaltungen:
- EP-A1- 2 096 006
- EP-B1- 1 436 176
- DE-A1- 19 831 462

## Beschreibung

Die Erfindung betrifft eine Airbaganordnung nach dem Oberbegriff des Anspruchs 1 sowie ein Verfahren zur Herstellung einer solchen Airbaganordnung.

Aus der EP 2 096 006 A1 ist eine Airbaganordnung bekannt, welche einen Schusskanal mit darin angeordneten Airbag, eine den Schusskanal verschließenden Airbagklappe sowie ein Haltemittel zur Absicherung der Verbindung der Airbagklappe zur restlichen Airbaganordnung umfasst, wobei das Haltemittel einen ersten Endabschnitt, der mit der Unterseite der Airbagklappe verbunden ist, einen zweiten Endabschnitt der mit dem Schusskanal oder einem die Airbagklappe umgebenen Träger verbunden ist, sowie einen zwischen ersten und zweiten Endabschnitt angeordneten Mittelabschnitt, welcher auf mindestens drei überlappenden Teilabschnitten besteht, aufweist. Zur Verbindung von ersten Teilabschnitt und Unterseite der Airbagklappe wird vorgeschlagen, den ersten Endabschnitt mit einer Kunststoffschiene zu verbinden und die Kunststoffschiene anschließend festzuschrauben. Diese Möglichkeit zur Verbindung ist jedoch relativ aufwändig.

Gemäß der EP 1 436 176 B1 ist vorgesehen, den ersten Endabschnitt mit der Airbagklappe zu verkleben oder den Endabschnitt aufzukaschieren, wobei hierzu ein separater Arbeitsschritt notwendig ist.

Aufgabe der Erfindung ist es daher, eine Airbaganordnung zu schaffen, welche ein einfacheres Herstellungsverfahren gestattet und somit zur Reduktion der Herstellungskosten beiträgt. Eine weitere Aufgabe der Erfindung ist es, ein Verfahren zur Herstellung einer solchen Airbaganordnung zu ermöglichen.

Diese Aufgaben werden durch eine Airbaganordnung mit den Merkmalen des Anspruchs 1 sowie ein Verfahren nach Anspruch 10 gelöst. Vorteilhafte Weiterbildungen sind durch die in den abhängigen Ansprüchen angegebenen Maßnahmen möglich.

Erfindungsgemäß umfasst die Airbaganordnung zusätzlich zu den bekannten Merkmalen eine kunststoffundurchlässige Zwischenschicht, die entweder zwischen der Unterseite und dem anliegenden Teilabschnitt oder zwischen mindestens zwei der überlappenden Teilabschnitte angeordnet ist und die mit dem Träger stoffschlüssig verbunden ist. Außerdem ist der erste Endabschnitt zumindest teilweise in den Träger eingelegt.

So wird es möglich, eine Verbindung zwischen Haltemittel und Airbagklappe in einem Kunststoffformwerkzeug beim Herstellen des Trägers durch Umspritzen auszubilden. Die Zwischenschicht verhindert hierbei, dass benachbarte Teilabschnitte durch eindringenden, zum Umspritzen verwendeten Kunststoff miteinander stoffschlüssig verbunden werden. Dagegen durchdringt der den Träger bildende Kunststoff typischerweise zumindest den ersten Endabschnitt zumindest teilweise. Normalerweise bildet der zum Umspritzen verwendete Kunststoff auch den die Airbagklappe umgebenden Kunststoffträger. Eine vorteilhaft einfach herzustellende Ausführung sieht vor, dass dann auch der zweite Endabschnitt zumindest teilweise von dem Kunststoff durchdrungen ist.

Eine stoffschlüssige Verbindung zwischen Unterseite und Zwischenschicht kann auch durch den anliegenden Teilabschnitt hindurch bestehen, insbesondere derart, dass der anliegende Teilabschnitt ebenfalls in den Träger eingelegt ist und so eine stoffschlüssige Verbindung zwischen dem Träger und der unter dem anliegenden Teilabschnitt angeordneten Zwischenschicht besteht.

Bevorzugt kann die Zwischenschicht zusätzlich mit dem Haltemittel verbunden sein. Hierdurch wird verhindert, dass die Zwischenschicht beim Umspritzen verrutschen kann, so dass eine Herstellung weiter vereinfacht wird.

Besonders bevorzugt ist die Zwischenschicht zwischen dem Träger und dem anliegenden Teilabschnitt angeordnet. So wird verhindert, dass zum Umspritzen verwendeter Kunststoff in den anliegenden Teilabschnitt eindringt und die Materialeigenschaften des Haltemittels, wie beispielsweise seine Dehnbarkeit, im kompletten Bereich der überlappenden Teilbereiche nicht durch eindringenden Kunststoff verändert werden.

In einer vorteilhaften Ausführungsform ist das Haltemittel selbst kunststoffdurchlässig ausgebildet. Hierdurch kann zum Umspritzen verwendeter Kunststoff das Haltemittel durchdringen und bereichsweise umschließen, so dass eine besonders zuverlässige Verbindung zwischen Haltemittel und Träger der Airbagklappe außerhalb des durch die Zwischenschicht geschützten Bereichs möglich wird.

Besonders bevorzugt kann das Haltemittel netzartig ausgebildet sein oder aus einem kunststoffdurchlässigen Gewebe bestehen. Ein derartig ausgebildetes Haltemittel weist eine große Oberfläche auf und ermöglicht somit eine besonders zuverlässige Verbindung zum Träger der Airbagklappe.

In einer weiteren Ausführungsform ist zumindest einer der Endabschnitte aus mindestens zwei Endteilabschnitten ausgebildet, wobei die Endteilabschnitte des Endabschnitts in gleicher Weise überlappend angeordnet sind wie die Teilabschnitte des Mittelabschnitts. Hierdurch wird eine Verbindung zwischen Endabschnitt und Träger der Airbagklappe weiter verbessert, da beim Umspritzen ein Formschluss zwischen dem Endabschnitt und dem zum Umspritzen verwendeten Kunststoff entsteht.

In einer Ausführungsform erstreckt sich die kunststoffundurchlässige Zwischenschicht ausschließlich über den Mittelabschnitt. Hierdurch wird erreicht, dass ein möglichst großer Bereich des Haltemittels für eine Verbindung zwischen Haltemittel und Träger der Airbagklappe zur Verfügung steht, wobei lediglich der Mittelabschnitt, bei dem ein Eindringen von zum Umspritzen verwendetem Kunststoff nachteilig wäre, durch die Zwischenschicht geschützt wird. Dadurch, dass ein großer Bereich des Haltemittels für eine Verbindung zwischen Haltemittel und Träger der Airbagklappe zur Verfügung steht, wird ein Hinausreißen des Haltemittels aus dem Träger beim Auslösen des Airbags besonders zuverlässig verhindert.

In einer besonders bevorzugten Ausführungsform besteht die kunststoffundurchlässige Zwischenschicht aus einem Material, in das Kunststoff eindringen, aber nicht durchdringen kann. Hierdurch entsteht beim Umspritzen eine besonders zuverlässige stoffschlüssige Verbindung zwischen Zwischenschicht und Träger der Airbagklappe. Durch die so ausgebildete stoffschlüssige Verbindung wird ein Ablösen der Zwischenschicht im Falle eines Auslösens des Airbags zuverlässig vermieden.

Eine besonders feste Verbindung zwischen Unterseite der Airbagklappe und Zwischenschicht ist möglich, wenn die kunststoffundurchlässige Zwischenschicht als ein Vlies ausgebildet ist.

Um ein Verrutschen der Zwischenschicht beim Umspritzen zuverlässig zu verhindern, kann diese bevorzugt mit dem Mittelabschnitt des Haltemittels verbunden sein. Dies kann bevorzugt durch Vernähen, Heften, Kleben und/oder Schweißen geschehen.

In einer weiteren vorteilhaften Ausführungsform beinhaltet die Airbaganordnung mindestens ein Verbindungselement, welches eine Verbindung zwischen mindestens zwei Teilabschnitten herstellt. Hierdurch kann sich eine zur Verfügung stehende Länge des Haltemittels während eines Aufklappens der Airbagklappe verändern, sodass zunächst eine Drehbewegung der Airbagklappe initiiert wird, bevor sich der Mittelabschnitt des Haltemittels entfaltet. Das Verbindungselement sollte selbstverständlich eine geringere Zugfestigkeit als das Haltemittel aufweisen, damit sich im Falle des Auslösens des Airbags der Mittelabschnitt entfaltet, ohne dass das Haltemittel reißt.

In einer bevorzugten Ausführungsform ist das Verbindungselement als durch Verkleben, Verschweißen, Vernähen oder Heften hergestellte Naht ausgebildet.

In einer besonders bevorzugten Ausführungsform realisiert das Verbindungselement zugleich die Verbindung zwischen Zwischenschicht und Mittelabschnitt. Hierdurch können die Vorteile einer Verbindung zwischen Zwischenschicht und Mittelabschnitt und einer Verbindung zwischen mindestens zwei Teilabschnitten durch einen Verfahrensschritt zugleich erzielt werden.

Des Weiteren umfasst die Erfindung ein Verfahren zur Herstellung einer vorangehend beschriebenen Airbaganordnung. In einem ersten Verfahrensschritt wird eine Verbindung zwischen Zwischenschicht und mindestens einem Teilabschnitt hergestellt und der Mittelabschnitt gefaltet. Im zweiten Verfahrensschritt wird das vorzugsweise kunststoffdurchlässige Haltemittel derart in ein Kunststoffformwerkzeug eingelegt, dass eine Oberseite des Haltemittels mit einem Kunststoff umspritzbar ist. In einem dritten Verfahrensschritt wird der Träger der Airbagklappe durch Umspritzen der Oberseite des Haltemittels mit Kunststoff gebildet, derart dass ein erster Endabschnitt des Haltemittels zumindest teilweise vom Kunststoff durchdrungen wird.

In einer bevorzugten Ausführungsform wird beim ersten Verfahrensschritt die Zwischenschicht mit dem anliegenden Teilabschnitt verbunden. In einer weiteren vorteilhaften Ausführungsform wird die Zwischenschicht ausschließlich im Mittelabschnitt aufgebracht.
In einer weiteren bevorzugten Ausführungsform kann ein die Airbagklappe umgebender Träger gleichzeitig mit dem Träger der Airbagklappe durch Umspritzen hergestellt werden. Insbesondere kann hierzu die Oberseite des Haltemittels derart umspritzt werden, dass auch ein zweiter Endabschnitt des Haltemittels zumindest teilweise vom Kunststoff umschlossen wird, sodass dieser im die Airbagklappe umgebenen Träger angeordnet ist.

Im Folgenden soll die Erfindung anhand einiger Ausführungsbeispiele näher erläutert werden. Es zeigen:
- Fig. 1: eine Schnittansicht einer erfindungsgemäßen Airbaganordnung,
- Fign. 2a-2d: mehrere Mittelabschnitte des Haltemittels entsprechend verschiedener Ausführungsformen der Erfindung, wobei sich die Ausführungsformen in der Anordnung der Zwischenschicht unterscheiden und
- Fig. 3: perspektivische Ansicht eines bereits gefalteten aber noch nicht an einer Airbagklappe montierten Haltemittels mit daran angebrachter Zwischenschicht.

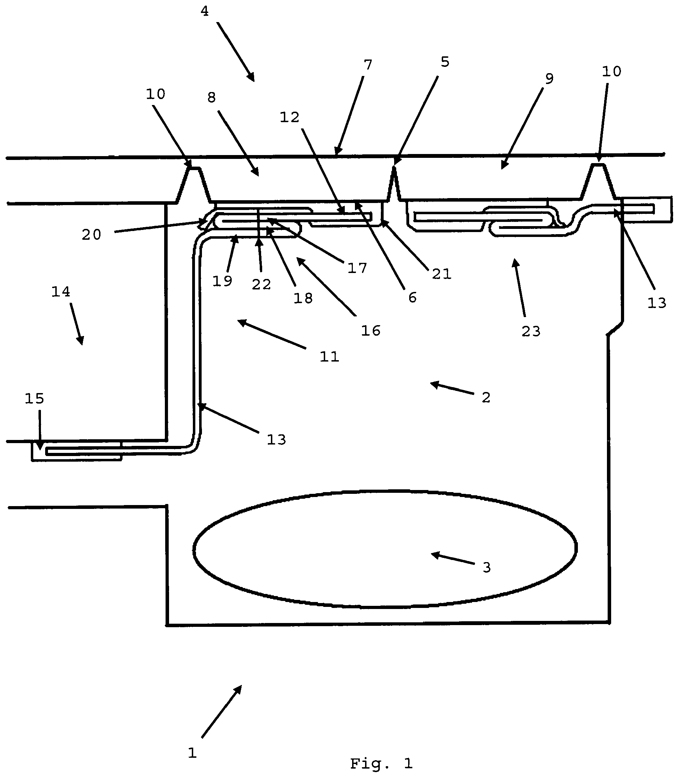

In Fig. 1 ist eine erfindungsgemäße Airbaganordnung 1 gezeigt. In diesem Ausführungsbeispiel ist die Airbaganordnung 1 so angeordnet, dass die Vorderkante von einem Fahrzeug, in dem die Airbaganordnung 1 eingebaut ist, rechts vom gezeichneten Ausschnitt, und die Hinterkante links von dem gezeichneten Ausschnitt angeordnet ist. Diese beinhaltet einen Airbag 3, der in einem Schusskanal 2 angeordnet ist. Der Schusskanal 2 wird von einer aus Kunststoff ausgebildeten Airbagklappe 4 verschlossen. Die Airbagklappe weist eine dem Schusskanal 2 zugewandte, durch einen Träger 8 gebildete Unterseite und eine einem Fahrgastraum zugewandte Sichtseite 7 auf. Auf der in der Zeichnung rechten Seite der Airbagklappe 4 befindet sich eine Aufrisslinie 5. Am in der Zeichnung linken Rand der Airbagklappe 4 sind Schwächungen 10 eingebracht, welche im Falle einer Auslösung des Airbags 3 eine Scharnierfunktion haben. Anliegend an der Unterseite der Airbagklappe 4 ist ein mit der Airbagklappe 4 verbundenes Haltemittel 11 angeordnet.

Das Haltemittel weist einen ersten Endabschnitt 12 auf, der zumindest teilweise in den Träger 8 der Airbagklappe 4 eingelegt ist. In Figur 1 ist der erste Endabschnitt 12 umschlossen vom Kunststoff der Trägers 8 dargestellt. Dies ist besonders vorteilhaft, da so eine besonders feste Verbindung zwischen Träger 8 und ersten Endabschnitt 12 gebildet wird.

Am gegenüberliegenden Ende weist das Haltemittel 11 einen zweiten Endabschnitt 13, der mit einem den Schusskanal umgebenden Träger 14 verbunden ist, auf. In diesem Ausführungsbeispiel ist der zweite Endabschnitt 13 zumindest teilweise in den umgebenden Träger 14 eingebettet. Zwischen erstem Endabschnitt 12 und zweitem Endabschnitt 13 weist das Haltemittel 11 einen Mittelabschnitt 16 auf, der aus mindestens drei überlappenden Teilabschnitten 17, 18, 19, besteht. Oberhalb des an der Unterseite der ersten Klappe anliegenden ersten Teilabschnitts 17 ist eine sich nur über den Mittelabschnitt 16 des Haltemittels 11 erstreckende kunststoffundurchlässige Zwischenschicht 20 angeordnet. Je nach Ausführungsform kann sich die Zwischenschicht nur teilweise oder auch vollständig über den Mittelabschnitt 16 erstrecken. Der erste Endabschnitt 12 sowie die Zwischenschicht 20 sind stoffschlüssig mit dem Träger 8 der Airbagklappe 4 verbunden.

In dieser Ausführungsform besteht das Haltemittel 11 aus einem Netz, welches kunststoffdurchlässig ist. Hierdurch wird eine besonders feste Verbindung zwischen erstem Endabschnitt 12 und der Airbagklappe 4 ermöglicht derart, dass zum Ausbilden des Trägers 8 verwendeter Kunststoff den ersten Endabschnitt 12 durchdringt. Die Zwischenschicht 20 ist in diesem Ausführungsbeispiel als ein Vlies ausgebildet, so dass der zur Ausbildung des Trägers 8 verwendete Kunststoff in die Zwischenschicht 20 eindringen, diese aber nicht durchdringen kann, wodurch eine besonders feste Verbindung zwischen Träger 8 und Zwischenschicht 20 besteht. Obwohl ein Eindringen des Kunststoffs in die Zwischenschicht 20 möglich ist, ist diese für den Kunststoff undurchlässig. Die Zwischenschicht 20 ist am Mittelabschnitt 16 mittels eines Verbindungselements, welches beispielsweise als Naht 22 ausgebildet ist, befestigt, wobei das Verbindungselement vorzugsweise zugleich die Teilabschnitte 17, 18, 19 miteinander verbindet. Diese Naht 22 weist eine geringere Zugfestigkeit auf als das Haltemittel 11, d.h. beim Auslösen des Airbags 3 reißt die Naht 22 und nicht das Haltemittel 11.

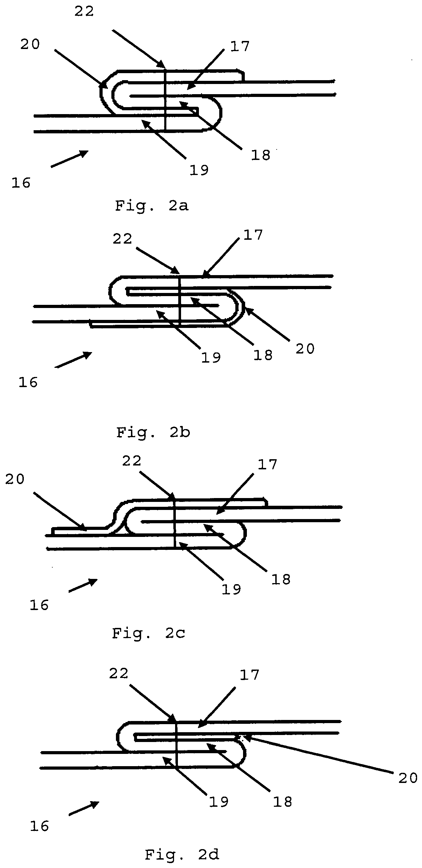

In den Fign. 2a-2b sind Mittelabschnitte 16 von Haltemitteln 11 gemäß verschiedenen Ausführungsformen der Erfindung dargestellt.

In Fig. 2a umgreift die Zwischenschicht 20 den ersten und zweiten Teilabschnitt 12, 13, so dass die Zwischenschicht 20 sowohl zwischen Unterseite und erstem Teilabschnitt 17 als auch zwischen zweitem Teilabschnitt 18 und drittem Teilabschnitt 19 angeordnet ist. Dadurch, dass die Zwischenschicht 20 oberhalb des ersten Teilabschnitts 17 angeordnet ist, wird der gesamte Mittelabschnitt 16 vor eindringendem Kunststoff geschützt. Dadurch, dass die Zwischenschicht 20 zugleich zwischen zweitem Teilabschnitt 18 und drittem Teilabschnitt 19 angeordnet ist, wird eine besonders zuverlässige Positionierung der Zwischenschicht 20 erreicht, insbesondere da die Zwischenschicht 20 somit an zwei verschiedenen Stellen mit dem Mittelabschnitt 16 vernäht ist.

Eine ähnlich zuverlässige Positionierung wird in der Ausführungsform, die in Fig. 2b gezeigt ist, erreicht. Dort ist die Zwischenschicht 20 unterhalb des dritten Teilabschnitts 19 und zwischen erstem Teilabschnitt 17 und zweitem Teilbereich 18 angeordnet. Der zwischen erstem Teilabschnitt 17 und zweitem Teilabschnitt 18 angeordnete Teil der Zwischenschicht 20 schützt den Mittelabschnitt 16 überwiegend vor eindringendem Kunststoff. Beim Umspritzen kann der Kunststoff lediglich in den ersten Teilabschnitt 17 eindringen, wobei jedoch aufgrund der zwischen erstem Teilabschnitt 17 und zweitem Teilabschnitt 18 angeordneten Zwischenschicht 20 ein Verkleben von erstem Teilabschnitt 17 und zweitem Teilabschnitt 18 durch eindringenden Kunststoff vermieden wird.

In Fig. 2c ist die Zwischenschicht 20 oberhalb des ersten Teilabschnitts 17 angeordnet und erstreckt sich über den überlappenden Bereich hinaus in Richtung des zweiten Endabschnitts 13. Durch die relativ großflächige Aufbringung der Zwischenschicht 20 auf dem Mittelabschnitt 16 des Haltemittels wird ein Eindringen von Kunststoff in den Mittelabschnitt 16 besonders zuverlässig vermieden. Der Aufwand zur Aufbringung der Zwischenschicht 20 ist jedoch gegenüber den anderen Ausführungsformen geringfügig erhöht.

Eine besonders einfache Möglichkeit der Anordnung der Zwischenschicht 20 ist in Fig. 2d gezeigt. Dort ist die Zwischenschicht 20 lediglich zwischen erstem Teilabschnitt 17 und zweitem Teilabschnitt 18 angeordnet. Auch hier verhindert die Zwischenschicht 20 ein Verkleben des Teilabschnitts 17 mit dem Teilabschnitt 18 und des Teilabschnitts 18 mit dem Teilabschnitt 19.

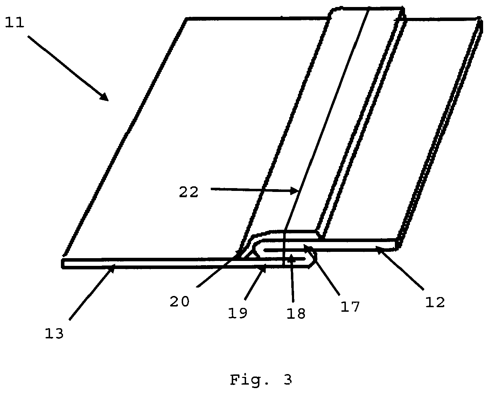

In einem Ausführungsbeispiel des Verfahrens zur Herstellung einer in Figur 1 dargestellten Airbaganordnung 1 wird zunächst der Mittelabschnitt 16 gefaltet und mit der Zwischenschicht 20 vernäht. Ein Haltemittel 11 nach diesem Verfahrensschritt ist in Figur 3 dargestellt. Dort ist auch zu erkennen, dass ein erfindungsgemäßes Haltemittel 11 relativ breit ausgebildet sein, d.h. eine relativ große Ausdehnung in die zur Zeichenebene aus Figur 1 und 2a bis 4 orthogonale Richtung aufweisen kann. Bevorzugt kann es sich in Breitenrichtung über die komplette Airbagklappe 4 erstrecken, sodass ein größtmöglicher Bereich zur Verbindung von Haltemittel 11 und Unterseite der Airbagklappe 4 zur Verfügung steht.

Nach diesem Verfahrensschritt wird das Haltemittel 11 mit der im Bereich des Mittelabschnitts 16 angeordneten Zwischenschicht 20 in ein Kunststoffformwerkzeug eingelegt, sodass eine Oberseite des Haltemittels 11 mit Kunststoff umspritzbar ist.

Danach wird der Träger 8 der Airbagklappe 4 durch Umspritzen der Oberseite des Haltemittels 11 gebildet.

Auch wenn in den vorangehenden Figuren eine einklappige Airbagabdeckung gezeigt ist, kann die Erfindung selbstverständlich auch für mehrklappige Airbagabdeckungen angewendet werden.

## Patentansprüche

1. Airbaganordnung (1) mit mindestens einer einen Schusskanal (2) überdeckenden Airbagklappe (4) aus einem Kunststoff mit einer einem Fahrzeuginnenraum zugewandten Sichtseite (7) und einem Träger (8), der eine der Sichtseite (7) abgewandte Unterseite bildet, sowie einem mit dem Träger (8) verbundenen Haltemittel (11), welches einen ersten, zumindest teilweise in den Träger (8) eingelegten Endabschnitt (12) und einen zweiten, mit einem die Airbagklappe (4) umgebenden Kunststoffträger (14) verbundenen Endabschnitt (13) aufweist und zwischen dem ersten und zweiten Endabschnitt (12, 13) einen Mittelabschnitt (16) umfasst, wobei der Mittelabschnitt (16) mindestens drei sich überlappende Teilabschnitte (17, 18, 19) aufweist und mindestens ein Teilabschnitt (17) an der Unterseite der Airbagklappe (4) oder des umgebenden Kunststoffträgers (14) anliegt, **dadurch gekennzeichnet, dass** zwischen der Unterseite und dem anliegenden Teilabschnitt (17) oder zwischen mindestens zwei der überlappenden Teilabschnitte (17, 18, 19) eine kunststoffundurchlässige Zwischenschicht (20) angeordnet ist und die Zwischenschicht (20) mit dem Träger (8) oder dem umgebenden Kunststoffträger (14) stoffschlüssig verbunden ist, wobei der erste Endabschnitt (12) und/oder der zweite Endabschnitt (13) zumindest teilweise von einem den Träger (8) und/oder den Kunststoffträger (14) bildenden Kunststoff durchdrungen sind.

2. Airbaganordnung nach Anspruch 1, **dadurch gekennzeichnet, dass** das Haltemittel (11) kunststoffdurchlässig ausgebildet ist.

3. Airbaganordnung nach Anspruch 2, **dadurch gekennzeichnet, dass** das Haltemittel (11) netzartig ausgebildet ist oder aus einem kunststoffdurchlässigen Gewebe besteht.

4. Airbaganordnung nach einem der Ansprüche 1 bis 3, **dadurch gekennzeichnet, dass** sich die kunststoffundurchlässige Zwischenschicht (20) ausschließlich über den Mittelabschnitt (16) erstreckt.

5. Airbaganordnung nach einem der Ansprüche 1 bis 4, **dadurch gekennzeichnet, dass** die kunststoffundurchlässige Zwischenschicht (20) aus einem Material besteht, in welches Kunststoff eindringen kann.

6. Airbaganordnung nach Anspruch 5, **dadurch gekennzeichnet, dass** die kunststoffundurchlässige Zwischenschicht (20) als ein Vlies ausgebildet ist.

7. Airbaganordnung nach einem der vorangehenden Ansprüche, **dadurch gekennzeichnet, dass** die Zwischenschicht (20) mit dem Mittelabschnitt (16) des Haltemittels (11) vorzugsweise durch Vernähen, Heften, Verkleben oder Schweißen verbunden ist.

8. Airbaganordnung nach einem der vorangehenden Ansprüche, **dadurch gekennzeichnet, dass** mindestens zwei der Teilabschnitten (17, 18, 19) durch mindestens ein Verbindungselement verbunden sind, wobei vorzugsweise das Verbindungselement als durch Nähen, Heften, Kleben oder Schweißen hergestellte Naht (22) ausgebildet ist.

9. Airbaganordnung nach den Ansprüchen 7 und 8, **dadurch gekennzeichnet, dass** das Verbindungselement, durch das die mindestens zwei der Teilabschnitten (17, 18, 19) verbunden sind, zugleich zur Verbindung der Zwischenschicht (20) mit dem Mittelabschnitt (16) des Haltemittels (11) ausgebildet ist.

10. Verfahren zur Herstellung einer Airbaganordnung (1) nach einem der vorhergehenden Ansprüche, welches folgende Schritte aufweist:
a) Verbinden der Zwischenschicht (20) mit dem Mittelabschnitt (16) und Falten des Mittelabschnitts (16);
b) Einlegen des Haltemittels (11) in ein Kunststoffformwerkzeug, derart, dass eine Oberseite des Haltemittels (11), welches die Zwischenschicht (20) aufweist, mit einem Kunststoff umspritzbar ist;
c) Ausbilden eines eine Unterseite einer Airbagklappe bildenden Trägers (8) durch Umspritzen der Oberseite des Haltemittels (11) mit Kunststoff, derart, dass ein erster Endabschnitt (12) des Haltemittels (11) zumindest teilweise in den Träger (8) eingebettet und von dem den Träger (8) bildenden Kunststoff durchdrungen wird.

## Claims

1. An airbag arrangement (1) with at least one airbag flap (4) of a plastic, said airbag flap covering an ejection channel (2) and having a viewed side (7) which faces the vehicle interior and having a carrier (8) which forms a lower side which is away from the viewed side (7), as well as with a holding means (11) which is connected to the carrier (8) and which comprises a first end section (12) which is inserted at least partly into the carrier (8) and a second end section (13) which is connected to a plastic carrier (14) which surrounds the airbag flap (4), said holding means further comprising a middle section (16) between the first and the second end section (12, 13), wherein the middle section (16) comprises at least three overlapping part-sections (17, 18, 19) and at least one part-section (17) bears on the lower side of the airbag flap (4) or of the surrounding plastic carrier (14), **characterised in that** a plastic-impermeable intermediate layer (20) is arranged between the lower side and the bearing part-section (17) or between at least two of the overlapping part-sections (17, 18, 19) and the intermediate layer (20) is materially connected to the carrier (8) or to the surrounding plastic carrier (14), wherein the first end section (12) and/or the second end section (13) is at least partly penetrated by a plastic which forms the carrier (8) and/or the plastic carrier (14).

2. An airbag arrangement according to claim 1, **characterised in that** the holding means (11) is designed in a plastic-permeable manner.

3. An airbag arrangement according to claim 2, **characterised in that** the holding means (11) is designed in a net-like manner or consists of a plastic-permeable fabric.

4. An airbag arrangement according to one of the claims 1 to 3, **characterised in that** the plastic-impermeable intermediate layer (2) extends exclusively over the middle section (16).

5. An airbag arrangement according to one of the claims 1 to 4, **characterised in that** the plastic-impermeable intermediate layer (20) consists of a material into which plastic can penetrate.

6. An airbag arrangement according to claim 5, **characterised in that** the plastic-impermeable intermediate layer (20) is designed as a non-woven.

7. An airbag arrangement according to one of the preceding claims, **characterised in that** the intermediate layer (20) is connected to the middle section (16) of the holding means (11), preferably by way of sewing, stitching, bonding or welding.

8. An airbag arrangement according to one of the preceding claims, **characterised in that** at least two of the part-sections (17, 18, 19) are connected by way of at least one connecting element, wherein the connecting element is preferably formed as a seam (22) which is created by way of sewing, stitching, bonding or welding.

9. An airbag arrangement according to the claims 7 and 8, **characterised in that** the connecting element, by way of which the at least two part-sections (17, 18, 19) are connected, at the same time is designed for connecting the intermediate layer (20) to the middle section (16) of the holding means (11).

10. A method for manufacturing an airbag arrangement (1) according to one of the preceding claims, said method comprising the following steps:
a) connecting the intermediate layer (20) to the middle section (16) and folding the middle section (16);
b) inserting the holding means (11) into a plastic moulding tool in a manner such that a surface of the holding means (11), said holding means comprising the intermediate layer (20), can be peripherally injected with a plastic;
c) forming a carrier (8) which forms a lower side of an airbag flap, by way of peripherally injecting the upper side of the holding means (11) with plastic in a manner such that a first end section (12) of the holding means (11) is at least partly embedded into the carrier (8) and is penetrated by the plastic which forms the carrier (8).

## Revendications

1. Dispositif d'airbag (1) avec au moins un clapet d'airbag (4) recouvrant un canal de tir (2), constitué d'une matière plastique avec un côté visible (7) orienté vers un intérieur de véhicule et un support (8), qui forme un côté inférieur opposé au côté visible (7), ainsi qu'un moyen de maintien (11) relié au support (8), qui comprend une première portion d'extrémité (12) inséré au moins partiellement dans le support (8) et une deuxième portion d'extrémité (13) relié à un support en matière plastique (14) entourant le clapet d'airbag (4) et comprend, entre la première et la deuxième portions d'extrémité (12, 13), une portion centrale (16), la portion centrale (16) comprenant au moins trois parties (17, 18, 19) superposées et au moins une partie (17) s'appuie contre le côté inférieur du clapet d'airbag (4) ou du support en matière plastique (14) qui l'entoure, **caractérisé en ce que**, entre le côté inférieur et la partie (17) en appui ou entre au moins deux des parties (17, 18, 19) superposées, se trouve une couche intermédiaire (20) imperméable aux matières plastiques et la couche intermédiaire (20) est reliée par liaison de matière au support (8) ou au support de matière plastique (14) qui l'entoure, la première portion d'extrémité (12) et/ou la deuxième portion d'extrémité (13) étant imprégnée au moins partiellement par une matière plastique constituant le support (8) et/ou le support en matière plastique (14).

2. Dispositif d'airbag selon la revendication 1, **caractérisé en ce que** le moyen de maintien (11) est perméable aux matières plastiques.

3. Dispositif d'airbag selon la revendication 2, **caractérisé en ce que** le moyen de maintien (11) est conçu de manière réticulée ou est constitué d'un tissu en matière plastique transparente.

4. Dispositif d'airbag selon l'une des revendications 1 à 3, **caractérisé en ce que** la couche intermédiaire (20) en matière plastique opaque s'étend exclusivement au-dessus de la portion centrale (16).

5. Dispositif d'airbag selon l'une des revendications 1 à 4, **caractérisé en ce que** la couche intermédiaire (20) imperméable aux matières plastiques est constituée d'un matériau dans lequel la matière plastique peut pénétrer.

6. Dispositif d'airbag selon la revendication 5, **caractérisé en ce que** la couche intermédiaire (20) imperméable aux matières plastiques est conçue comme un tissus non tissé.

7. Dispositif d'airbag selon l'une des revendications précédentes, **caractérisé en ce que** la couche intermédiaire (20) est reliée à la portion centrale (16) du moyen de maintien (11) de préférence par couture, agrafage, collage ou soudure.

8. Dispositif d'airbag selon l'une des revendications précédentes, **caractérisé en ce qu'**au moins deux des parties (17, 18, 19) sont reliées par l'intermédiaire d'au moins un élément de liaison, de préférence l'élément de liaison étant constitué d'un cordon (22) réalisé par couture, agrafage, collage ou soudure.

9. Dispositif d'airbag selon les revendications 7 et 8, **caractérisé en ce que** l'élément de liaison, par l'intermédiaire duquel les au moins deux parties (17, 18, 19) sont reliées, est conçu également pour la liaison de la couche intermédiaire (20) avec la portion centrale (16) du moyen de maintien (11).

10. Procédé de fabrication d'un dispositif d'airbag (1) selon l'une des revendications précédentes, qui comprend les étapes suivantes :
a) liaison de la couche intermédiaire (20) avec la portion centrale (16) et pliage de la portion centrale (16) ;
b) insertion du moyen de maintien (11) dans un outil de formage de matière plastique, de façon à ce qu'un côté supérieur du moyen de maintien (11), qui comprend la couche intermédiaire (20), peut être surmoulé avec une matière plastique ;
c) réalisation d'un support (8) constituant un côté inférieur d'un clapet d'airbag par surmoulage du côté supérieur du moyen de maintien (11) avec une matière plastique, de façon à ce qu'une première portion d'extrémité (12) du moyen de maintien (11) est intégrée au moins partiellement dans le support (8) et est imprégnée de la matière plastique constituant le support (8).
